Europäisches Patentamt

European Patent Office

Office européen des brevets

(19)

(11) **EP 1 522 527 A1**

(12) # EUROPEAN PATENT APPLICATION

(43) Date of publication:
**13.04.2005 Bulletin 2005/15**

(51) Int Cl.⁷: **C02F 1/68**, C02F 1/00, B67D 1/00, A23L 2/68, C02F 1/461

(21) Application number: **04028073.7**

(22) Date of filing: **20.06.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **21.06.2002 JP 2002181523**
**28.08.2002 JP 2002248426**

(62) Document number(s) of the earlier application(s) in accordance with Art. 76 EPC:
**03253914.0 / 1 382 574**

(71) Applicant: **Sanden Corporation**
**Isesaki-shi, Gunma 372-8502 (JP)**

(72) Inventors:
• **Ito, Miwako**
**Isesaki-shi Gunma 372-8502 (JP)**
• **Watanabe, Kazushige**
**Isesaki-shi Gunma 372-8502 (JP)**
• **Sato, Motoharu**
**Isesaki-shi Gunma 372-8502 (JP)**

(74) Representative: **Haley, Stephen**
**Gill Jennings & Every,**
**Broadgate House,**
**7 Eldon Street**
**London EC2M 7LH (GB)**

Remarks:
This application was filed on 26 - 11 - 2004 as a divisional application to the application mentioned under INID code 62.

(54) **Mineral water making apparatus**

(57) The mineral water making apparatus has a structure that includes a water tank 10 having a mineral eluting material 11 disposed therein, a water supply pipe 12 for introducing raw water such as tap water into the water tank 10, and a water intake pipe 14 for intaking mineral water made in the water tank 10; and an acidic food-additive supply apparatus 13 for supplying an acidic food additive 13d into the water intake pipe 14 is further installed. Since the acidic food-additive is added to the mineral water flowing in the water intake pipe 14, the pH of the mineral water can be controlled, and the deposition of the mineral components in the water intake pipe 14 can be inhibited, preventing the clogging of the water intake pipe 14.

EP 1 522 527 A1

## Description

The present invention relates to a mineral water making apparatus for making mineral water by adding mineral components to raw water.

Heretofore, as a mineral water making apparatus of this kind, an apparatus wherein mineral stone and a filter medium for removing foreign substances are placed in a water tank has been commonly used. When raw water such as tap water is passed through the water tank, mineral components are added to the tap water, and drinking water containing minerals is provided.

However, the quantity of mineral components actually added to the drinking water in such a mineral water making apparatus is extremely small (quantity of added mineral components: 50 ppm or less as general hardness (GH)), which is unsatisfactory as mineral-containing drinking water.

In order to solve such a problem, a mineral water making apparatus disclosed in Japanese Patent Application Laid-Open No. 6-190379 (1994) was proposed. In this mineral water making apparatus, since carbon dioxide gas was injected into tap water to increase the concentration of free carbon dioxide, and the tap water was brought into contact with a porous body supporting calcium carbonate, the mineral component was eluted in short time, and mineral-containing drinking water of a desired mineral concentration could be made and provided.

However, this mineral water making apparatus had a problem in that a gas cylinder for injecting carbon dioxide gas was required, increasing the costs and enlarging the size of the apparatus. In addition, since the quality of raw water affected the eluting rate of the mineral components, the apparatus had another problem in that it could not maintain the mineral concentration. Furthermore, the apparatus had another problem in that the mineral components deposited in the water intake pipe when the mineral concentration elevated needlessly.

In view of the above-described problems in conventional mineral water making apparatuses, the object of the present invention is to provide a mineral water making apparatus of a simple structure that can improve the mineral elution rate of the mineral eluting material, can maintain the mineral concentration of mineral water constant, and can inhibit the deposition of the mineral components.

The present invention is a mineral water making apparatus comprising a water tank having a mineral eluting material disposed therein, a water supply pipe for introducing raw water such as tap water into the water tank, and a water intake pipe for intaking mineral water produced in the water tank; further comprising an acidic food-additive supply apparatus for supplying an acidic food additive into the water intake pipe.

According to the present invention, since the acidic food-additive is added to the mineral water flowing in the water intake pipe, the pH of the mineral water can be controlled, and the deposition of the mineral components in the water intake pipe can be inhibited, preventing the clogging of the water intake pipe.

In the drawings:

FIG. 1 is a water circuit diagram showing a mineral water making apparatus according to an embodiment of the present invention;
FIG. 2 is a block diagram showing a drive control circuit of a solenoid valve controlled by a pH sensor, according to an embodiment of the present invention;
FIG. 3 is a flow chart showing the control of a solenoid valve according to the embodiment of FIG. 2;
FIG. 4 is a water circuit diagram showing a mineral water making apparatus according to an alternative embodiment;
FIG. 5 is a front sectional view showing a mineral water making apparatus according to the alternative embodiment in Fig, 4;
FIG. 6 is a side sectional view showing a mineral water making apparatus according to the alternative embodiment in Fig. 4;
FIG. 7 is an enlarged sectional view showing a mixture according to the alternative embodiment in Fig 4; and

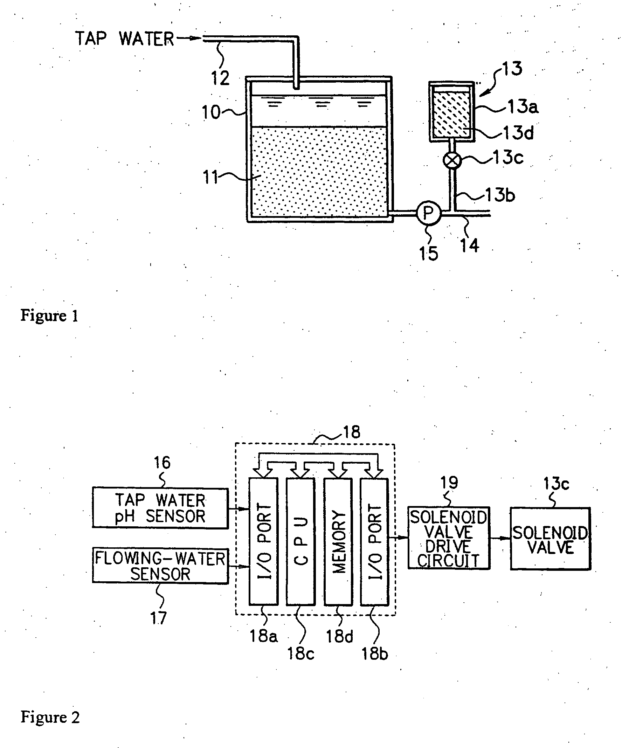

FIG. 1 shows an embodiment of a mineral water making apparatus according to the present invention.

The mineral water making apparatus has a water tank 10 for making mineral water. A mineral eluting material 11 is disposed in the water tank 10. As the mineral eluting material 11, powdered or granulated coral sand, Mai-fan-shih (healstone), mineral stone and the like are used. By passing water through the mineral eluting material 11, mineral components are eluted into the water, and mineral water is made.

A water-supply pipe 12 is linked to the upper portion of the water tank 10, and tap water (raw water) is supplied into the water tank 10 through the water-supply pipe 12. An acidic food-additive 13d is supplied into the water tank 10. The acidic food-additive supply apparatus 13 is composed of a tank 13a, a derivation pipe 13b connected to a water intake pipe 14, and a solenoid valve 13c for opening and closing the derivation pipe 13b. The tank 13a accommodates an acidic food additive 13d. As the acidic food additive 13d, an aqueous solution wherein a food additive that exhibits acidity, for example, citric acid, DL-malic acid, phosphoric acid, and fumaric acid, is used. Of these acidic food additives 13d, citric acid and DL-malicacid have the effect of improving the intake efficiency of mineral components when the mineral water is taken in human bodies.

The water intake pipe 14 connected to a faucet or the like is linked to the lower portion of the water tank 10. A pump 15 is installed in the water intake pipe 14. While a pump 15 is activated, mineral water made in the water tank 10 is supplied to the faucet through the water intake pipe 14.

According to this embodiment, when the solenoid valve 13c is opened, the acidic food additive 13d is supplied to the water intake pipe 14.

If the mineral concentration is needlessly high, eluted minerals may be precipitated and mixed in beverage, and mineral water unsuitable for beverage may be made. Therefore, in the mineral water making apparatus according to this embodiment, when intaking mineral water, the solenoid valve 13c is opened to introduce the acidic food additive 13d into the water intake pipe 14. Thereby, the mineral eluting rate is improved, and no mineral components extract in the water intake pipe 14.

Calcium carbonate ($CaCO_3$) is used as the mineral eluting material 11, it causes the following chemical reaction:

$$CaCO_3 + 2H^+ \rightarrow Ca^{2+} + H_2O + CO_2$$

A pH sensor 16 may be installed to determine the open time of the solenoid valve 13c depending on the quality, i.e. the pH, of tap water and mineral water. The pH sensor 16 for sensing the pH value of tap water is installed in the water-supply pipe 12. A flowing-water sensor 17 for sensing the presence of flowing water in the water intake pipe 14 is installed in the water intake pipe 14.

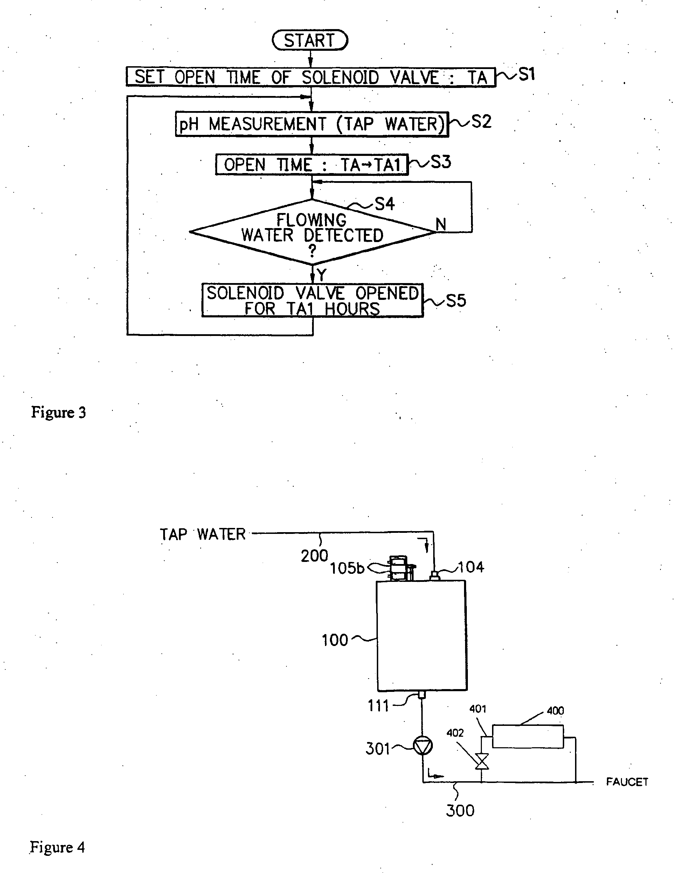

As FIG. 2 shows, the mineral water making apparatus has a controller 18 composed of microcomputers as control means for controlling the solenoid valve 13c. The controller 18 has I/O ports 18a and 18b, a CPU 18c, and a memory 18d. The memory 18d stores the setting-open time TA of the solenoid valve 13c in advance. The time TA determines the adding quantity of the acidic food additive 13d. The time TA is set on the basis of an empirical rule that the desired mineral concentration in the mineral water can be achieved when the pH of tap water is normal, and the solenoid valve 13c is opened for the time TA. The controller 18 controls the solenoid valve 13c through a solenoid valve drive circuit 19 as shown in the flow chart of FIG. 3.

First, as described above, the setting-open time TA of the solenoid valve 13c has been stored in the memory IEd (Si). The pH value of tap water in the water-supply pipe 12 is sensed by the pH sensor 16, and measured by the controller 18 (S2). If the measured pH value is high, the mineral-elution rate lowers, and if the measured pH value is low, the mineral-elution rate rises. Therefore, while the measured pH value is high, the time TA is lengthened to increase the supply quantity of the acidic food additive 13d; whereas when the measured pH value is low, the time TA is shortened to decrease the supply quantity of the acidic food additive 13d. In other words, the setting-open time TA is corrected to time TA1 in response to the pH value of tap water (S3).

Under these circumstances, the flowing-water sensor 17 monitors whetherwater flows in the water intake pipe 14 or not (whether there is water intake or not) (54). when the flowing-water sensor 17 senses flowing water, the solenoid valve 13c is opened for time TA1 (S5). Thereby, since the acidic food additive 13d corresponding to the pH value of tap water is supplied into the water tank 10, the concentration of the produced mineral water is maintained constant.

A conductivity sensor (not shown) for sensing the electric conductivity of tap water or mineral water may be installed in place of the pH sensor 16 to control the open time of the solenoid valve 13c on the basis of the electric conductivity sensed by the conductivity sensor.

More specifically, while the electric conductivity of tap water or mineral water is low, the mineral concentration is high. On the other hand, while the electric conductivity of tap water or mineral water is high, the mineral concentration is low. Therefore, when the measured electric conductivity is low, the open time of the solenoid valve 13c is shortened to decrease the quantity of mineral elution. On the other hand, when the measured electric conductivity is high, the open time of the solenoid valve 13c is lengthened to increase the quantity of mineral elution. Thereby, the mineral concentration in the mineral water can be maintained at a predetermined value.

The flow rate of the acidic food additive 13d is controlled using not only the solenoid valve 13c, but a pump (not shown) may be used in place of the solenoid valve 13c.

FIGS. 4 to 7 show another embodiment of a mineral water making apparatus according to the present invention. In the above-described embodiment, only the mineral eluting material 11 is disposed in the water tank 10, and a liquid acidic food additive 13d is used. whereas in this embodiment, an electrode for eluting minerals is disposed in the water tank as well as a mineral eluting material, and a solid acidic food additive is used. A mineral water making apparatus according to the eighth embodiment will be described referring to FIGS. 4 to 6.

The mineral water making apparatus has a water tank 100, a water-supply pipe 200 for supplying raw water such as tap water into the water tank 100, and a water-intake pipe 300 for guiding the mineral water made in the water tank 100 to a faucet (not shown) using a pump 301.

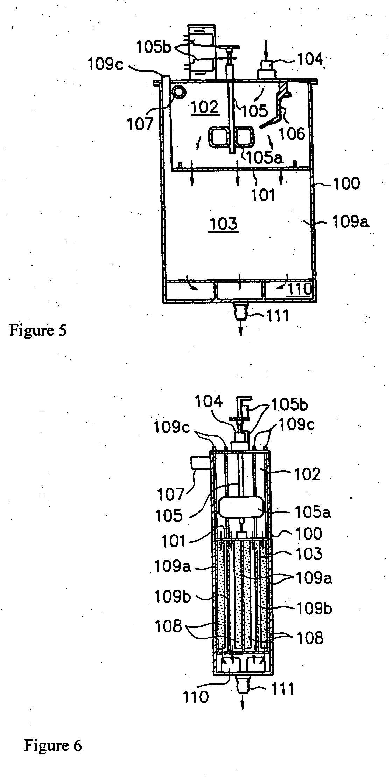

First, the structure of the water tank 100 will be described in detail referring to FIGS. 5 and 6. The water tank 100 is formed in a flat box shape, and the interior thereof is substantially divided into upper and lower portions by a diaphragm 101 that can pass water. Above the diaphragm 101, a water storage chamber 102 for supplying tap water is formed. Below the diaphragm 101, an electrolysis chamber 103 for electrolyzing water is formed.

A water conduit tube 104 to be connected to the water-supply pipe 200 is installed on the upper plate of the water storage chamber 102, and tap water is introduced into the water storage chamber 102 through the water conduit tube 104. A water-level detector 105 is installed in the water storage chamber 102. The water-level detector 105 has a structure to detect the up-and-down motion of a float 105a using upper and lower micro-switches 105b. The supply and stop of tap water is controlled on the basis of detection signals from each of the micro-switches 105b to maintain the water level in the water storage chamber 102 as predetermined. A guide plate 106 is also installed in the water storage chamber 102. The guide plate 106 guides tap water supplied from the water conduit tube 104 toward the central portion of the water storage chamber 102, so that the tap water flows from the central portion of the water storage chamber 102 to the entire water storage chamber 102. The reference numeral 107 denotes an overflow pipe for draining water exceeding the allowable quantity.

A plurality of mixtures 108 and a plurality of positive and negative pairs of electrodes for eluting minerals 109a and 109b are alternately disposed in the electrolysis chamber 103. The terminal 109c of each electrode 109a and 109b passes through the diaphragm 101 and protrudes from the upper plate of the water storage chamber 102 to be connected to the power supply.

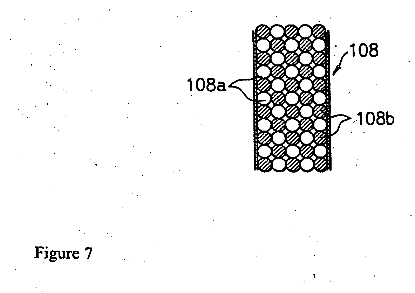

The mixture 108 is composed of a mineral eluting material 108a and a conductive material 108b as shown in FIG. 7. As the mineral eluting material 108a, powdered or granulated coral sand, healstone, mineral stone or the like is used. On the other hand, as the conductive material 108b, any one of powdered activated charcoal, granulated activated charcoal, fibrous activated charcoal, wood charcoal, carbon black, a gold-, silver-, or platinum-based metal; or the mixture thereof is used. Since a carbon-based, or gold-, silver-, or platinum-based metal is used as the conductive material 108b, even if the conductive material is eluted, it is harmless to human bodies. If activated charcoal is used as the conductive material 108b, the activated charcoal may be coated with silver to improve electric conductivity. Although the mixture 108 is composed of the mineral eluting material 108a and the conductive material 108b, as described above, water can pass through the mixture 108. In order to facilitate assembly and maintenance, the mixture 108 may be filled in a water-permeable container in advance, and the container may be disposed in the electrolysis chamber 103. In this case, the container filled with powdered or granulated mineral eluting material 108a and the conductive material 108b is used.

A DC voltage from a DC power source (not shown) is impressed between one electrode for eluting minerals 109a and the other electrode for eluting minerals 109b, and the one electrode for eluting minerals 109a constitutes a positive electrode, and the other electrode for eluting minerals 109b constitutes a negative electrode. The voltage, polarity, impressing time and the like of the DC power source are controlled by the control unit (not shown).

While a DC voltage is applied between the electrodes for eluting minerals 109a and 109b of the mineral water making apparatus according to this embodiment, in the side of the electrode for eluting minerals 109a, which is the positive electrode, water reacts as follows:

$$2H_2O + 4H^+ + O_2 + 4e\text{-}$$

Thus, the hydrogen ion concentration of the water in the positive electrode side rises to generate acidic water. On the other hand, in the side of the electrode for eluting minerals 109b, which is the negative electrode, water reacts as follows:

$$4H_2O + 4e^- \rightarrow 2H_2 + 4OH^-$$

Thus, alkaline water is generated in the negative electrode side. when calcium carbonate ($CaCO_3$) is used as the mineral eluting material 108a, the calcium carbonate reacts with acidic water as follows:

$$CaCO_3 + 2H^+ \rightarrow Ca^{2+} + H_2O + CO_2$$

Thus, mineral ions ($Ca^{2+}$) are eluted.

Here, since the mineral eluting material 108a is an insulator, it may act as the factor to lower conductivity between the electrodes for eluting minerals 109a and 109b. However, since a conductive material 108b is mixed with the mineral eluting material 108a in the mineral water making apparatus of this embodiment, the efficiency of electrolysis is not lowered, and furthermore, the efficiency of mineral eluting is not lowered.

A confluence chamber 110 for combining the mineral-water generated in the electrolysis chamber 103 is disposed on the lower portion of the water tank 100. The mineral water flowing in the confluence chamber 110 flows down to the water-intake pipe 300 through the derivation pipe 111.

Next, the structure of the water-intake pipe 300 side will be described referring to FIG. 4. An acidic-food-additive supply apparatus 400 accommodating an acidic food additive is installed on the water-intake pipe 300 in the downstream side of the water tank 100. The acidic-food-additive supply apparatus 400 is installed from the middle of the water-intake pipe 300 in parallel to a part of the water-intake pipe 300 through the branch pipe 401. An open-close valve 402 is installed on the upstream side of the branch pipe 401. The supply of water to the acidic-food-additive supply apparatus 400 is controlled by the open-close operation of the open-close valve 402. Here, as in the above-described first embodiment, the acidic food additive may be any food additive that exhibits acidity, such as citric acid, DL-malic acid, phosphoric acid, and fumaric acid. The acidic food additive is stored in the acidic-food-additive supply apparatus 400 in the form of powdered or granulated solid so as to be efficiently eluted into tap water.

According to this embodiment, mineral components are eluted from the mineral eluting material 108a by impressing a DC voltage between electrodes for eluting minerals 109a and 109b. When the pump 301 is activated, tap water flows as arrows in FIGS. 4 to 6 show, and mineral water flows to the faucet.

In taking the mineral water, when the open-close valve 402 is opened, a part of mineral water flows into the acidic-food-additive supply apparatus 400, and the rise of pH in the water-intake pipe 300 is inhibited. Thereby, the acidic food-additive is added to the mineral water flowing in the water intake pipe 300, the pH of the mineral water can be controlled, and the deposition of the mineral components in the water intake pipe 300 can be inhibited, preventing the clogging of the water intake pipe 300.

Although the open-close valve 402 is installed in the branch pipe 401, a flow regulating valve (not shown) may be installed in place of the open-close valve 402. Thereby, the eluting quantity of the acidic food additive can be optionally controlled, and the mixing of excessive additive can be prevented.

In the same as in the previous embodiments, a pH sensor 16 or a conductivity sensor may be installed in the water-supply pipe 200 or the water tank 100, to control the open time of the open-close valve 402 on the basis of the quality of tap water or mineral water.

posed in said water tank (10,100).

4. The mineral water making apparatus according to any preceding claim , further comprising a water-quality detector for detecting the quality of at least one of the raw water supplied into said water tank (10,100), and the mineral water made in said water tank; and a controller (18) for controlling the quantity of the supplied acidic food additive (13d) on the basis of a detection signal from said water-quality detector.

5. The mineral water making apparatus according to claim 4, wherein said water-quality detector is at least one of a pH sensor (16) for sensing the pH of the raw water supplied into said water tank (10,100), or the mineral water made in said water tank; or a conductivity detector for detecting the electrical conductivity of the raw water supplied into said water tank, or the mineral water made in said water tank.

## Claims

1. A mineral water making apparatus comprising:

    a water tank (10,100) having a mineral eluting material (11) disposed therein;
    a water supply pipe (12,200) for introducing raw water such as tap water into said water tank; and
    a water intake pipe (14,300) for intaking mineral water made in said water tank;
    further comprising an acidic food-additive supply apparatus (13,400, 421) for supplying an acidic food additive (13d) into said water intake pipe.

2. The mineral water making apparatus according to claim 1, wherein a pair of positive and negative electrodes (109a, 109b) supplied with a direct-current voltage for eluting minerals are installed in said water tank (10,100).

3. The mineral water making apparatus according to claim 2, wherein a conductive material (108b) is dis-

TAP WATER →

12

10

11

13

13a

13d

13c

P

13b

15

14

Figure 1

18

16

TAP WATER
pH SENSOR

I/O PORT

C P U

MEMORY

I/O PORT

19

SOLENOID
VALVE
DRIVE
CIRCUIT

13c

SOLENOID
VALVE

FLOWING-WATER
SENSOR

17

18a

18c

18d

18b

Figure 2

Figure 3

Figure 4

Figure 5

Figure 6

Figure 7

European Patent
Office

## EUROPEAN SEARCH REPORT

Application Number

EP 04 02 8073

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | PATENT ABSTRACTS OF JAPAN vol. 1997, no. 09, 30 September 1997 (1997-09-30) -& JP 09 136081 A (BROTHER IND LTD), 27 May 1997 (1997-05-27) * abstract * ----- | 1-5 | C02F1/68 C02F1/00 B67D1/00 A23L2/68 C02F1/461 |
| X | EP 1 132 011 A2 (TELLURICA GMBH) 12 September 2001 (2001-09-12) * paragraphs [0012] - [0014] * ----- | 1 | |
| P,X | PATENT ABSTRACTS OF JAPAN vol. 2003, no. 07, 3 July 2003 (2003-07-03) -& JP 2003 062574 A (SANDEN CORP), 4 March 2003 (2003-03-04) * abstract * ----- | 1-3 | |

TECHNICAL FIELDS
SEARCHED    (Int.Cl.7)

C02F
A47J
B67D
A23L

~~The present search report has been drawn up for all claims~~

| Place of search | Date of completion of the search | Examiner |
|---|---|---|
| Munich | 26 January 2005 | Borello, E |

EPO FORM 1503 03.82 (P04C01)

**ANNEX TO THE EUROPEAN SEARCH REPORT
ON EUROPEAN PATENT APPLICATION NO.**

EP 04 02 8073

This annex lists the patent family members relating to the patent documents cited in the above-mentioned European search report.
The members are as contained in the European Patent Office EDP file on
The European Patent Office is in no way liable for these particulars which are merely given for the purpose of information.

26-01-2005

| Patent document cited in search report | | Publication date | Patent family member(s) | Publication date |
|---|---|---|---|---|
| JP 09136081 | A | 27-05-1997 | NONE | |
| EP 1132011 | A2 | 12-09-2001 | NONE | |
| JP 2003062574 | A | 04-03-2003 | NONE | |

EPO FORM P0459

For more details about this annex : see Official Journal of the European Patent Office, No. 12/82